(19) Europäisches Patentamt
European Patent Office
Office européen des brevets

(11) **EP 3 252 443 B1**

(12) **EUROPÄISCHE PATENTSCHRIFT**

(45) Veröffentlichungstag und Bekanntmachung des Hinweises auf die Patenterteilung:
**12.05.2021 Patentblatt 2021/19**

(21) Anmeldenummer: **17173582.2**

(22) Anmeldetag: **30.05.2017**

(51) Int Cl.:
**G01G 21/07** *(2006.01)*   **G01G 21/16** *(2006.01)*
**G01G 21/18** *(2006.01)*   **G01G 21/20** *(2006.01)*
**G01G 21/24** *(2006.01)*   **G01L 1/20** *(2006.01)*

(54) **DÜNSTELLENGELENK**

THIN FLEXURE JOINT

ARTICULATION DE MINCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2016 DE 102016110152**

(43) Veröffentlichungstag der Anmeldung:
**06.12.2017 Patentblatt 2017/49**

(73) Patentinhaber: **WIPOTEC GmbH**
**67657 Kaiserslautern (DE)**

(72) Erfinder:
• **Rübel, Andreas**
  **67737 Olsbrücken (DE)**
• **Bur, Christian**
  **66113 Saarbrücken (DE)**

(74) Vertreter: **Eder Schieschke & Partner mbB**
**Patentanwälte**
**Elisabethstraße 34**
**80796 München (DE)**

(56) Entgegenhaltungen:
**JP-A- 2015 114 160     US-A- 4 485 881**

EP 3 252 443 B1

**Beschreibung**

Die vorliegende Erfindung betrifft ein Dünnstellengelenk zur beweglichen Verbindung von Materialabschnitten nach dem Oberbegriff des Anspruchs 1, ein Messgerät, insbesondere eine Waage, mit einem solchen Dünnstellengelenk, nach Anspruch 13 und ein Verfahren zur Herstellung eines solchen Dünnstellengelenkes nach Anspruch 14.

In der Technik werden häufig Gelenke verwendet, um Bauteile beweglich miteinander zu verbinden. Die Gelenke sollen Bewegungen und Kraftübertragungen in bestimmte Richtungen ermöglichen, in den anderen Richtungen aber verhindern. Ein Beispiel hierfür ist ein Festkörpergelenk. Dabei wird zwischen zwei monolithisch miteinander verbundenen Materialabschnitten eine Materialverengung (eine sogenannte "Dünnstelle") vorgesehen, um Bewegungen um eine durch die Dünnstelle gebildete Schwenkachse zu ermöglichen. Schwenkbewegungen um dazu senkrecht stehende Achsen und translatorische Relativbewegungen der beiden Materialabschnitte werden jedoch verhindert.

Bekannt sind derartige Dünnstellengelenke insbesondere aus der modernen Wägetechnik, welche monolithisch ausgeführte Lenker-Mechaniken, sogenannte Monoblöcke, verwendet. Dadurch werden die Herstellungskosten gesenkt und gleichzeitig die Genauigkeit, die Reproduzierbarkeit und die Langzeitstabilität erhöht. Bei den Monoblöcken für Waagen werden Dünnstellen unter anderem als Gelenke für Parallelogrammlenker, für Hebel und an Koppelstangen eingesetzt. Bei Waagen, die nach dem Prinzip der elektromagnetischen Kraftkompensation arbeiten, sind die Auslenkungen der Hebel oder Parallellenker in der Regel sehr gering, so dass an den Gelenken nur geringe Schwenkwinkel auftreten.

Als Bearbeitungsverfahren zur Herstellung von Dünnstellen an Monoblöcken sind spanabhebende Verfahren bekannt, aber auch das Erodieren (mittels Draht) und die Bearbeitung mittels Laserstrahl sind bekannte Techniken.

Eine Dünnstelle übernimmt einerseits die Aufgabe, Zug- und Druckkräfte in Form von Normalspannungen sicher zu übertragen. Andererseits soll die Dünnstelle einer Verschwenkung um ihre Schwenkachse einen möglichst geringen Widerstand entgegensetzen, die Biegesteifigkeit um die Schwenkachse soll also möglichst gering sein. Daher wird versucht, möglichst viel Material im Bereich der Dünnstelle zu entfernen (Reduzierung der Biegesteifigkeit), unter Beibehaltung einer Mindestfestigkeit, insbesondere für Normalspannungen. Um dies zu erreichen, versuchen die aus dem Stand der Technik bekannten Lösungen entweder, den Querschnitt der Dünnstelle weiter zu reduzieren, wobei die Reduzierung über die gesamte Blockbreite konstant ausgeführt ist, oder aber die Breite der Dünnstelle wird durch zum Beispiel mittig auf der Schwenkachse der Dünnstelle angeordnete Ausnehmungen weiter reduziert. Bekannt sind dabei durchgängige Öffnungen oder Bohrungen (JP2004340593 A1 oder US 7307226 B2) oder Mulden oder Senkungen (DE 10 2013 108 097 B4 oder DE 100 15 311 B4). In jedem Fall wird neben der gewollten Reduzierung der Steifigkeit stets aber auch unerwünscht die Stabilität (Tragfähigkeit, Festigkeit) reduziert, selbst wenn dies in den Schriften als "akzeptabel" dargestellt wird.

Nachteilig bei diesen bekannten Lösungen ist, dass mit Senkung der Biegesteifigkeit auch die Festigkeit bzgl. Normalspannungen reduziert wird und umgekehrt. Außerdem ergeben sich durch Materialentfernung insbesondere in der Dünnstelle stets Bereiche mit erhöhter oder reduzierter Materialspannung (Hotspots).

Aus der JP 2015 114160 A ist ein monolithischer Wägeblock bekannt, dessen Dünnstellen zur Reduzierung der Ecklastempfindlichkeit verbreitert und mit Ausnehmungen durchsetzt sind. Ein zentraler Bereich der Dünnstelle trägt einen Dehnungsmessstreifen, wobei angrenzend an diesen zentralen Bereich Ausnehmungen vorgesehen sind, welche den Dehnungsmessstreifen von Torsionsspannungen möglichst entkoppeln sollen.

Aufgabe der Erfindung ist es, ein durch Materialentfernung verbessertes Dünnstellengelenk anzubieten. Vorzugsweise soll dabei die Festigkeit der Dünnstelle bezüglich auftretender Normalspannungen erhalten bleiben, während sich die Biegesteifigkeit des Gelenks reduziert.

Die Aufgabe wird gelöst durch ein Dünnstellengelenk nach Anspruch 1 und ein Messgerät nach Anspruch 13. Ein Verfahren nach Anspruch 14 ist auf die Herstellung eines erfindungsgemäßen Gelenks gerichtet. Weitere vorteilhafte Ausführungsformen ergeben sich aus den Unteransprüchen.

Der Erfindung liegt die Erkenntnis zugrunde, dass die an der Dünnstelle herrschenden Festigkeitseigenschaften bezüglich Normalspannungen und Biegespannungen auch in zur Dünnstelle beabstandeten Bereichen beeinflusst werden können mittels speziell geformter Ausnehmungen. Diese Ausnehmungen sind so positioniert und geformt, dass die Festigkeit eines durch die Ausnehmungen gelegten und von der Dünnstelle beabstandeten Querschnitts derjenigen entspricht, die ein vergleichbarer Querschnitt durch die Dünnstelle selbst aufweist. "Festigkeit" kann sich dabei auf die Festigkeit bezüglich Normalspannungen, insbesondere in Längsrichtung Y des Gelenks, oder auf die Festigkeit bezüglich Biegung um die Schwenkachse ($W_D$) beziehen.

Das erfindungsgemäße Prinzip der Konstanthaltung der Festigkeit über eine wählbare Länge zu beiden Seiten der Dünnstelle ist dabei so zu verstehen, dass gewisse, insbesondere fertigungsbedingte Toleranzen, nicht ausgeschlossen werden können oder sogar vorgeben werden. Auf Grund der komplexen Formgebung von Dünnstellen und der sie durchdringenden Ausnehmungen sind unter einander entsprechenden Festigkeiten solche zu verstehen, die dem Ziel einer möglichst übereinstimmenden Festigkeitseigenschaft gerecht werden, da das Ziel einer absoluten identischen Festigkeit an verschiedenen gedachten Schnittstellen praktisch nur schwer oder nicht erreichbar ist.

Durch die erfindungsgemäße Gestaltung der Ausnehmungen am Dünnstellengelenk wird erreicht, dass die in der Dünnstelle bestehende Festigkeit auch entlang eines Abstandes zur Dünnstelle weitgehend unverändert bleibt, obwohl die Materialdicke jenseits der Dünnstelle zunimmt.

Die Dünnstelle selbst als dünnste Stelle des Gelenks verbleibt bevorzugt als "neutrale Zone", die als Vollmaterial ausgeführt ist. Schwächungen der Dünnstelle durch in sie selbst eingebrachte Ausnehmungen können vorteilhafterweise unterbleiben.

Das erfindungsgemäße Dünnstellengelenk umfasst einen ersten und einen zweiten Materialabschnitt, die monolithisch über eine Dünnstelle miteinander verbunden sind. Die in einer Dickenrichtung X gemessene Materialdicke beider Materialabschnitte verjüngt sich dabei jeweils längs einer Verjüngungszone in Richtung einer zur X-Richtung senkrechten Längenrichtung Y bis zur Dünnstelle, die dort eine minimale Dünnstellendicke aufweist. Die Schwenkachse der Dünnstelle erstreckt sich entlang einer zur X- und Y-Richtung senkrecht verlaufenden Breitenrichtung Z.

Ein durch die Dünnstelle gelegter Querschnitt $Q_D$ in einer X-Z-Ebene und mit einer in Z-Richtung verlaufenden Schnittbreite ergibt dabei eine Querschnittsfläche $A_D$. Die Querschnittsfläche $A_D$ kann sich aus mehreren Teilflächen zusammensetzen, wenn die Dünnstelle durch in ihr liegende Öffnungen geteilt ist und die betrachtete Schnittbreite solche Öffnungen umfasst.

Die so gebildete Querschnittsfläche $A_D$ weist bezüglich Normalspannungen in Y-Richtung eine bestimmte Festigkeit auf, wobei die Festigkeit gegen Schubspannungen in Z-Richtung und insbesondere in X-Richtung von untergeordneter Bedeutung ist. Ferner hat die in der Dünnstelle liegende Querschnittsfläche $A_D$ eine Biegefestigkeit (Widerstandmoment um die Schwenkachse), welche durch eine geringe Materialdicke der Dünnstelle in X-Richtung möglichst gering gewählt wird.

Der Erfindung liegt der Gedanke zu Grunde, die in der Querschnittsfläche $A_D$ vorhandene Festigkeit bzgl. einer bestimmten Beanspruchung auch in einem dazu parallelen anderen Querschnitt (Q', Q"...) herzustellen, der in einer Verjüngungszone, parallel zum Querschnitt $Q_D$, angenommen wird, wo mittels Ausnehmungen Material aus dem Gelenk entnommen ist.

Die Querschnitte (Q', Q"...) werden an verschiedenen Positionen entlang der Y-Richtung senkrecht zu dieser betrachtet. Sie erzeugen jeweils Querschnittsflächen (A', A"...) im Gelenk, die sich aus einzelnen Teilquerschnittsflächen zusammensetzen können und wenigstens teilweise von den Ausnehmungen begrenzt werden. Erfindungsgemäß sind die Ausnehmungen und damit die Teilquerschnittsflächen so gewählt, dass die Z-Breite der Teilquerschnittsflächen mit zunehmendem Abstand der Querschnitte (Q', Q"...) zur Dünnstellenposition ($Y_D$) abnimmt. Die kraftübertragende Fläche der einzelnen Teilquerschnittsflächen wird somit schmaler. Zur Beibehaltung der gewünschten Festigkeit bzw. Steifigkeit werden die einzelnen Teilquerschnittsflächen stattdessen zunehmend höher, wenn die X-Wanddicke der Verjüngungszonen mit zunehmender Y-Richtung ansteigt.

Die Ausnehmungen sind so in der oder den Verjüngungszonen platziert und gestaltet, dass dieses Verhalten wenigstens entlang eines in Y-Richtung verlaufenden Streckenabschnitts $L_u$ gilt. Vorzugsweise bleibt die Anzahl der Teilquerschnittsflächen entlang der Strecke $L_u$ konstant. Weiterhin bevorzugt haben die Teilquerschnittsflächen dabei eine regelmäßige geometrische, insbesondere rechteckige Form.

Die Ausnehmungen sind nach Form und Lage so gewählt, dass sich die in der Dünnstelle bestehende Festigkeit auch entlang eines größer werdenden Y-Abstandes zur Dünnstelle nicht oder nur geringfügig ändert. Diese Eigenschaft wird dadurch erreicht, dass ein durch die wenigstens eine Ausnehmung erzeugter Querschnitt Q', Q"... entlang einer X-Z-Schnittebene mit der Schnittbreite B eine Querschnittsfläche A', A"... erzeugt (die sich aus mehreren Teilflächen aufsummieren kann), deren Festigkeitseigenschaft derjenigen der in der Dünnstelle selbst ermittelten Querschnittsfläche $A_D$ weitgehend entspricht.

Wenn die Materialdicke, ausgehend von der Dünnstelle, in Y-Richtung konstant zunimmt, wird die gleichbleibende Festigkeit mit zunehmendem Y-Abstand von der Dünnstelle dadurch erreicht, dass der Querschnitt Q' geometrische Formen, insbesondere Rechtecke, aufweist, deren in Z-Richtung gemessene Breite mit zunehmendem Y-Abstand zur Dünnstelle abnimmt. Dadurch wird dem Umstand Rechnung getragen, dass die Materialdicke der Verjüngungszonen mit zunehmendem Y-Abstand zur Dünnstelle (beispielsweise quadratisch) zunimmt. Entsprechend muss die Z-Breite der Querschnittsfläche A', A"... beziehungsweise ihrer Teilflächen mit zunehmendem Y-Abstand zur Dünnstelle geringer werden, um insgesamt die gleiche Festigkeit wie an der Dünnstelle selbst zu erzielen. Vorzugsweise bleibt entlang eines in Y-Richtung verlaufenden Streckenabschnitts ($L_u$) die jeweils gebildete Querschnittsfläche A', A"... konstant, wobei sie besonders bevorzugt der Querschnittsfläche $A_D$ in der Dünnstelle entspricht.

Wenn konstante Normalspannungen (in Y-Richtung) angestrebt werden, sind die Ausnehmungen so zu gestalten, dass die Querschnittsfläche A' im Querschnitt Q' derjenigen Querschnittsfläche $A_D$ im Dünnstellenquerschnitt $Q_D$, weitgehend entspricht (Flächenäquivalent). In Längsrichtung Y des Gelenks bleibt die Normalspannungen übertragende Querschnittsfläche über eine gewisse Strecke $L_u$ konstant, so dass gilt

$$\sigma = \frac{F}{A} = \text{const.}$$

Anders als bei bekannten Blattfedern, die zwar auch eine konstante Dicke, aber einen undefinierten Drehpunkt aufweisen, bleibt bei der auf das Flächenäquivalent gerichteten Ausführungsform der Drehpunkt am Ort der kleinsten Dicke bzw. dem kleinsten Widerstandmoment definiert erhalten. Im Ergebnis konnte bei dieser Variante durch die Verringerung der Biegesteifigkeit die Ansprechempfindlichkeit einer Waage um 20% erhöht werden, bei gleich gebliebener Gelenkdicke und Festigkeit.

Soll alternativ zum Flächenäquivalent die Biegesteifigkeit reduziert werden, ohne die Biegefestigkeit zu reduzieren, dann muss mit zunehmendem Y-Abstand von der Dünnstelle das Widerstandsmoment so konstant gehalten werden (Widerstandsmoment-Äquivalent), dass das Widerstandsmoment der Querschnittsfläche $A_D$ um die Schwenkachse $W_D$ weitgehend übereinstimmt mit den jeweiligen Widerstandsmomenten der Querschnittsfläche A', A"... im Querschnitt Q', Q"....

Die Dünnstelle wird häufig erzeugt durch zwei Bohrungen in einem Materialblock, so dass sie als Steg zwischen den Mantelflächen zweier eng aneinander liegender Kreiszylinder verbleibt. Der Querschnitt $Q_D$ an der Dünnstelle hat dann, wenn die Dünnstelle entlang der betrachteten Schnittbreite B durchgängig ohne Öffnungen aus Vollmaterial gebildet ist, die Form eines Rechtecks. Die Querschnittsfläche $A_D$ ergibt sich dabei aus der Schnittbreite B multipliziert mit der verbleibenden Dicke $X_D$ der Dünnstelle. Sollte die Dünnstelle entlang der betrachteten Schnittbreite B von einer oder mehreren Öffnungen durchsetzt sein, so ergäben sich mehrere, in Z-Richtung nebeneinander liegende einzelne rechteckige Querschnittsflächen, die sich zur Gesamtfläche $A_D$ aufsummieren.

Nach einer weiteren vorteilhaften Ausführungsform der Erfindung ist die wenigstens eine Ausnehmung in einer Verjüngungszone so gewählt, dass der Querschnitt Q', Q"...' mehrere geometrische Formen bevorzugt gleicher Größe erzeugt, bei denen es sich vorzugsweise um Rechtecke handelt. Je nach Gestaltung der Wandungen der Ausnehmungen können die einzelnen Teilquerschnitte jedoch auch die Form eines Trapezes, eines Parallelogramms, eines Polygons oder einer aus Geraden und/oder Kurven gebildeten Fläche haben. In einem besonders bevorzugten Fall haben die Ausnehmungen Wandflächen, die sich parallel zur X-Richtung erstrecken, so dass im Querschnitt Q', Q"...' einzelne Rechtecke entstehen.

Die erfindungsgemäßen Ausnehmungen müssen die Verjüngungszonen nicht vollständig durchdringen. Der Begriff der Ausnehmungen soll auch Vertiefungen umfassen. Denkbar ist es beispielsweise, einander in X-Richtung gegenüberliegende, in Z-Richtung versetzt zueinander positionierte Vertiefungen in eine oder beide Verjüngungszonen einzubringen. Ebenso lassen sich Ausnehmungen, welche die Verjüngungszone vollständig durchsetzen, kombinieren mit Vertiefungen, die das nicht tun. Entscheidend für den erfindungsgemäßen Erfolg ist die Gestaltung der Ausnehmungen derart, dass die Festigkeit der Dünnstelle etwa mit derjenigen im Bereich der Ausnehmungen übereinstimmt.

Eine vorteilhafte Ausführungsform der Erfindung sieht vor, dass wenigstens eine Ausnehmung in einem Schnitt mit einer Y-Z-Ebene einen Umriss aufweist, bei dem sich zwei Begrenzungslinien von einem gemeinsamen, der Dünnstelle am nächsten liegenden Scheitelpunkt in Y-Richtung von der Dünnstelle fort erstrecken, wobei sich wenigstens eine, vorzugsweise beide Begrenzungslinien mit zunehmendem Y-Abstand vorzugsweise symmetrisch von einer durch den Scheitelpunkt gelegten X-Y-Ebene entfernen. Wie auch aus den Zeichnungen ersichtlich ist, berücksichtigt der Verlauf der Begrenzungslinien die zunehmende Materialdicke der Verjüngungszone mit zunehmendem Y-Abstand zur Dünnstelle, so dass die aus dem Schnitt Q', Q"... resultierende Querschnittsfläche A', A"... für jeden Schnitt durch die Ausnehmung im Wesentlichen die gleiche Festigkeit aufweist wie die Dünnstelle selbst. Die Kurve ist dabei erfindungsgemäß eine Funktion der von der Y-Position abhängenden Materialdicke. Bei konstant zunehmender Materialdicke in der Verjüngungszone ergibt sich eine monotone Abhängigkeit des Kurvenverlaufs der Begrenzungslinie vom Y-Abstand zur Dünnstelle. Der erfindungsgemäße Erfolg wird aber auch dann erreicht, wenn die Materialdicke nicht konstant zunimmt, solange dies bei der Form der Ausnehmungen für die Erzielung von Querschnittsflächen mit weitgehend konstanter Festigkeit berücksichtigt wird.

Vorzugsweise ist das Dünnstellengelenk mit mehreren Ausnehmungen versehen, die in Breitenrichtung Z nebeneinander liegen. So ergibt sich eine gleichmäßige Spannungsverteilung über die betrachtete Schnittbreite B. Zweckmäßigerweise haben die Ausnehmungen die gleiche Form, was die Herstellung und Berechnung vereinfacht. Darüber hinaus haben die Ausnehmungen in Z-Richtung vorzugsweise gleiche Abstände zueinander, was die Spannungen noch gleichmäßiger über die Breite des Gelenks verteilt.

Eine Ausführungsform der Erfindung sieht vor, dass alle Ausnehmungen zur Dünnstelle in Y-Richtung etwas beabstandet sind, vorzugsweise zwischen 0,025 und 0,05 Millimeter. Dadurch erhält die Dünnstelle eine gewisse Y-"Länge", was zur Stabilität des Gelenks in diesem Bereich beiträgt.

Vorzugsweise sind Ausnehmungen zu beiden Seiten der Dünnstelle in Y-Richtung, also in der ersten und gegenüberliegenden zweiten Verjüngungszone vorgesehen. Dadurch entsteht ein weitgehend symmetrischer Spannungsverlauf zu beiden Seiten der Dünnstelle. Um Spannungsspitzen (Hotspots) zu vermeiden, können die Ausnehmungen beider Verjüngungszonen in Z-Richtung zueinander versetzt angeordnet sein. Mehrere Ausnehmungen können in identischer oder abweichender Form in Z- oder Y-Richtung nebeneinander angeordnet sein.

Die Ausnehmungen müssen vom Material der Verjüngungszone nicht vollständig umschlossen werden. Auch eine Ausführungsform, bei der wenigstens eine Ausnehmung als eine in Z-Richtung seitlich in den Rand der Verjüngungszone eingebrachte Tasche ausgebildet ist, ist denkbar. Vorzugsweise sind mehrere derartige Taschen symmetrisch zu einer X-Y-Ebene vorgesehen, welche das Gelenk in Z-Richtung mittig teilt.

Nach einer vorteilhaften Ausführungsform ist die Dünnstelle durch wenigstens eine Öffnung in mehrere, vorzugsweise zwei, in Breitenrichtung Z nebeneinander liegende Dünnstellenabschnitte D', D" aufgeteilt. Eine einzige zentrische Öffnung H in der Dünnstelle, welche auch die Verjüngungszonen durchsetzen kann, reduziert die Dünnstelle auf zwei zueinander in Z-Richtung beabstandete Verbindungsbereiche. Die Öffnung entfernt Material dort, wo es zur Übertragung von Momenten um eine zentrisch im Gelenk liegende Y-Achse oder X-Achse nur wenig beiträgt, anders als in den Randbereichen, die in Richtung der Z-Achse zum Zentrum einen größeren Abstand haben.

Abseits der Dünnstelle sind in der oder den Verjüngungszonen bevorzugt mehrere Ausnehmungen angeordnet. Sie können regelmäßig oder unregelmäßig zueinander in Y- oder Z-Richtung beabstandet sein, und sich dabei in Bezug auf die Schwenkachse auf gleicher oder zueinander versetzter Z-Position einzeln oder gruppenweise gegenüberliegen. Alternativ oder ergänzend können Ausnehmungen zu beiden Seiten der Schwenkachse mit gleichen oder unterschiedlichen Abständen zur Schwenkachse vorgesehen sein. Vorzugsweise sind Ausnehmungen in einer Verjüngungszone in Z-Richtung hintereinander liegend mit konstantem Z-Abstand zueinander und konstantem Y-Abstand zur Schwenkachse vorgesehen, während eine gleichartige Anordnung von Ausnehmungen in der anderen Verjüngungszone, also auf der anderen Seite der Schwenkachse, vorgesehen ist, wobei beide Ausnehmungsgruppen in Z-Richtung zueinander um den halben Z-Abstand der einzelnen Ausnehmungen versetzt sind. Vorzugsweise haben einige oder alle Ausnehmungen den gleichen Y-Z-Querschnitt.

Die Herstellung der Ausnehmungen soll bevorzugt mittels eines Laserstrahls erfolgen. (siehe hierzu die Anmeldung DE102016105985).

Die Bearbeitung des Gelenks zur Erzeugung der Ausnehmungen erfolgt bevorzugt von beiden Seiten der Dünnstelle (in X-Richtung gesehen), so dass z.B. die bei einseitiger Laserbearbeitung auftretende Abschrägung des Bearbeitungsrandes (Kegelform durch Laserstrahlbearbeitung) und somit das unerwünscht entstehende Eigenmoment vermieden bzw. reduziert wird.

Die Erfindung eignet sich für alle Arten von Gelenken, besonders für monolithische Festkörpergelenke und/oder Einsätze in der Mikromechanik. Sie betrifft vorzugsweise Messgeräte, insbesondere Waagen mit einem erfindungsgemäßen Dünnstellengelenk. Dieses bildet vorzugsweise Teil eines Hebels, einer Koppelstange, eines Drehgelenks, eines Kreuzfedergelenks oder einer Parallellenkermechanik. Die Waagen können insbesondere nach dem Prinzip der elektromagnetischen Kraftkompensation, des Dehnungsmessstreifens (DMS) oder der schwingenden Saite arbeiten.

Nachfolgend soll eine Ausführungsform anhand eines Figurenbeispiels näher erläutert werden. Dabei zeigen

Fig. 1      eine perspektivische Ansicht eines erfindungsgemäßen Dünnstellengelenks,

Fig. 2 bis 4      perspektivische Schnitte des Gelenks,

Fig. 5      eine schematische Draufsicht auf einen Abschnitt eines Dünnstellengelenks und

Fig. 6      eine perspektivische Darstellung eines Dünnstellengelenkabschnitts.

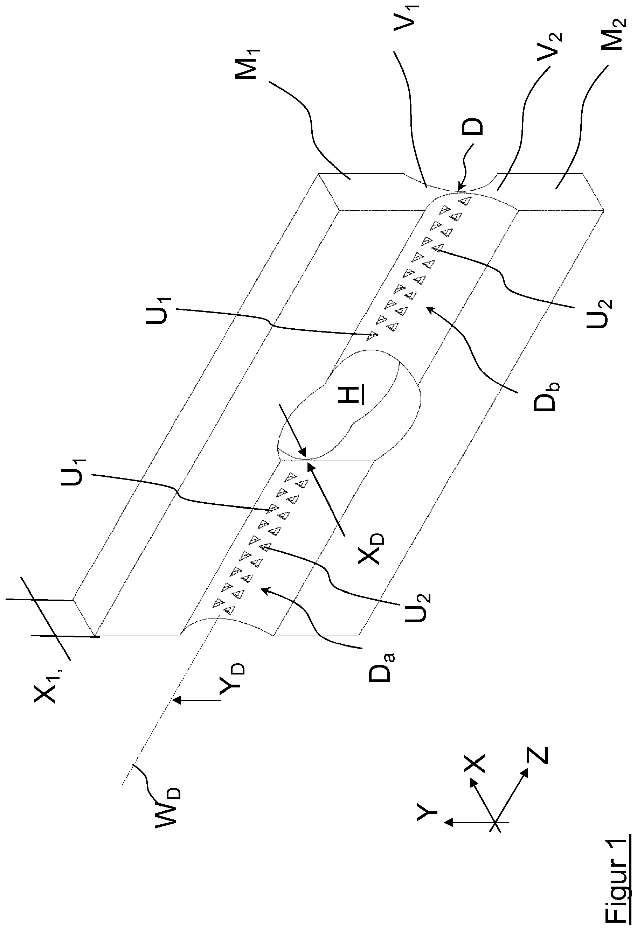

Fig. 1 zeigt in perspektivischer vereinfachter Darstellung ein erfindungsgemäßes Dünnstellengelenk. Es umfasst zwei Materialabschnitte $M_1$, $M_2$, die monolithisch über eine Dünnstelle D miteinander verbunden sind. Die Dünnstelle D wird gebildet durch zwei Verjüngungsabschnitte $V_1$, $V_2$, die sich als Teil der Materialabschnitte $M_1$, $M_2$, in einer Längenrichtung Y aufeinander zu erstrecken, wobei sich die senkrecht dazu in X-Richtung gemessene Dicke stetig reduziert bis auf eine minimale Dicke $X_D$, an der die eigentliche Dünnstelle D besteht. Diese erstreckt sich längs einer Schwenkachse $W_D$ in einer zur X- und Y-Richtung senkrechten Breitenrichtung Z. Der erste Materialabschnitt $M_1$ ist um die Dünnstelle D gegenüber dem zweiten Materialabschnitt $M_2$ verschwenkbar, wobei eine idealisiert angenommene Schwenkachse $W_D$ an der Längenposition $Y_D$ der Dünnstelle D in Z-Richtung verläuft. Eine zentrisch in die Dünnstelle D eingebrachte Öffnung H teilt die Dünnstelle in Z-Richtung in zwei Abschnitte Da, Db.

Mehrere Ausnehmungen $U_1$, $U_2$, von denen in den Figuren aus Gründen der Übersichtlichkeit nicht alle mit Bezugszeichen versehen sind, durchsetzen die erste beziehungsweise zweite Verjüngungszone $V_1$, $V_2$ zu beiden Seiten der Dünnstelle D (in Y-Richtung gesehen). Die Ausnehmungen $U_1$, $U_2$ sind so gewählt, dass die Festigkeitseigenschaften des Gelenks an der Dünnstelle D in etwa übereinstimmen mit den Festigkeitseigenschaften des Gelenks in einem Abstand zur Dünnstelle, der in die Ausnehmungen $U_1$, $U_2$ hineinreicht. Die nachfolgenden Figuren erläutern dies näher.

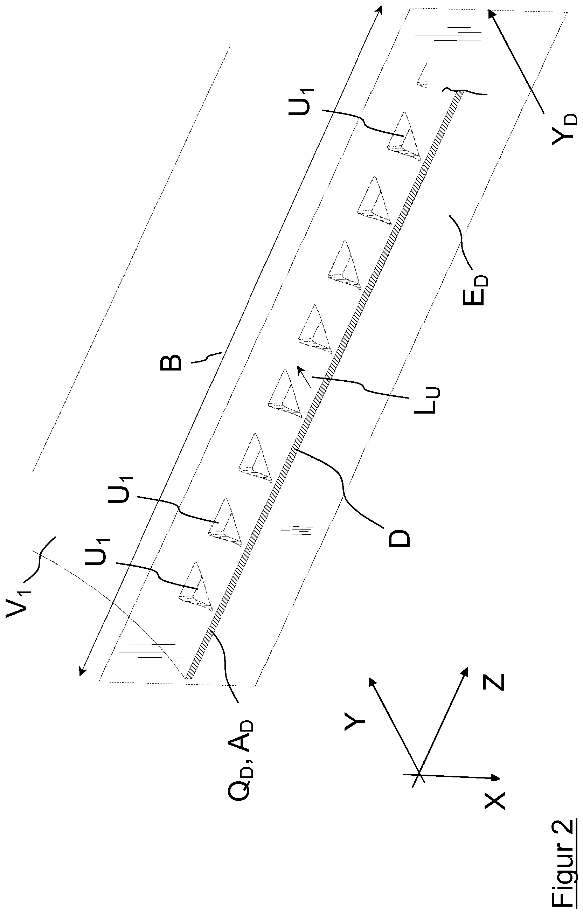

Fig. 2 zeigt einen Ausschnitt der Dünnstelle D mit der Breite B in vergrößerter und geschnittener Ansicht. Eine Schnittebene $E_D$, die in X-Z-Richtung durch die Dünnstelle gelegt ist, erzeugt einen Schnitt $Q_D$ mit einer Querschnittsfläche $A_D$. Die sich so ergebende Querschnittsfläche $A_D$ weist bestimmte Festigkeitseigenschaften bezüglich Normalspannungen in Y-Richtung oder bezüglich Biegemomenten um die Schwenkachse $W_D$ auf. Da die Dünnstelle D entlang der betrachteten Schnittbreite B ohne Unterbrechungen ausgebildet ist, ergibt sich eine einzige Querschnittsfläche $A_D$, die aufgrund der zylinderabschnittförmigen Oberflächen der Verjüngungszonen $V_1$, $V_2$ eine rechteckige Gestalt hat.

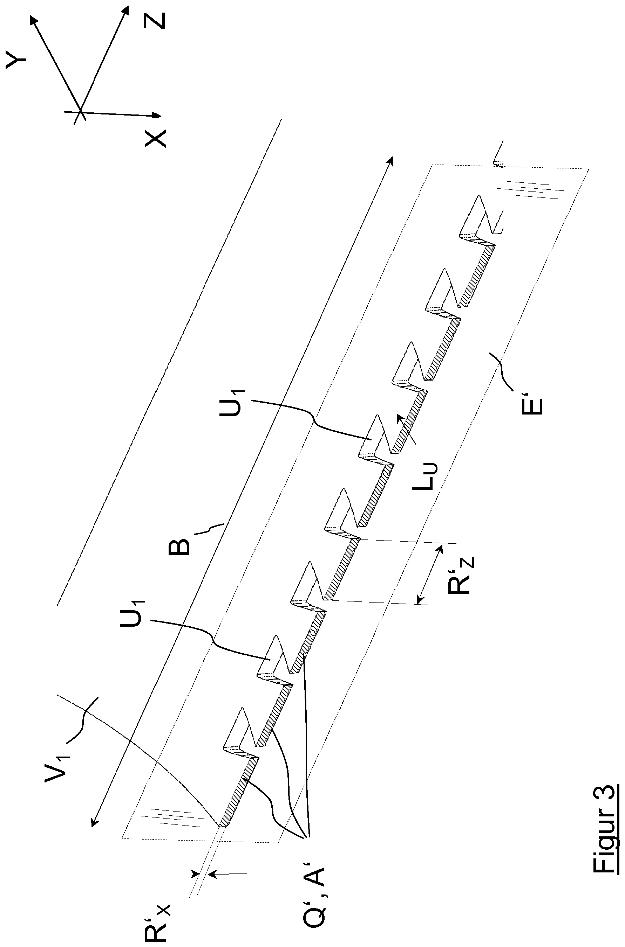

Fig. 3 zeigt eine zu Fig. 2 vergleichbare Schnittdarstellung, wobei hier eine zur Schnittebene $E_D$ in Y-Richtung parallel verschobene Schnittebene E' durch den Bereich der Verjüngungszone $V_1$ gelegt wurde, der von den Ausnehmungen $U_1$ durchsetzt ist. Entsprechend resultiert aus dem Schnitt Q' der Ebene E' mit der Verjüngungszone $V_1$ eine Anzahl einzelner, in Z-Richtung nebeneinander liegender rechteckiger Querschnittsflächen, die sich zu einer Gesamtfläche A' aufaddieren. Die einzelnen Rechteckflächen haben (bis auf die in Z-Richtung am Rand liegenden Abschnitte) eine Breite $R'_Z$. Erfindungsgemäß sind die Ausnehmungen $U_1$ so gewählt, dass die resultierende Querschnittsfläche A' übereinstimmt mit der in der Dünnstelle gebildeten Querschnittsfläche $A_D$ (Flächenäquivalent). Daraus folgt, dass eine in Y-Richtung auf das Gelenk eingebrachte Zug- oder Druckkraft in der Dünnstelle D die gleiche Spannung ($\sigma$ = F/A) erzeugt wie im Bereich der Ebene E' beziehungsweise des dortigen Querschnitts Q'.

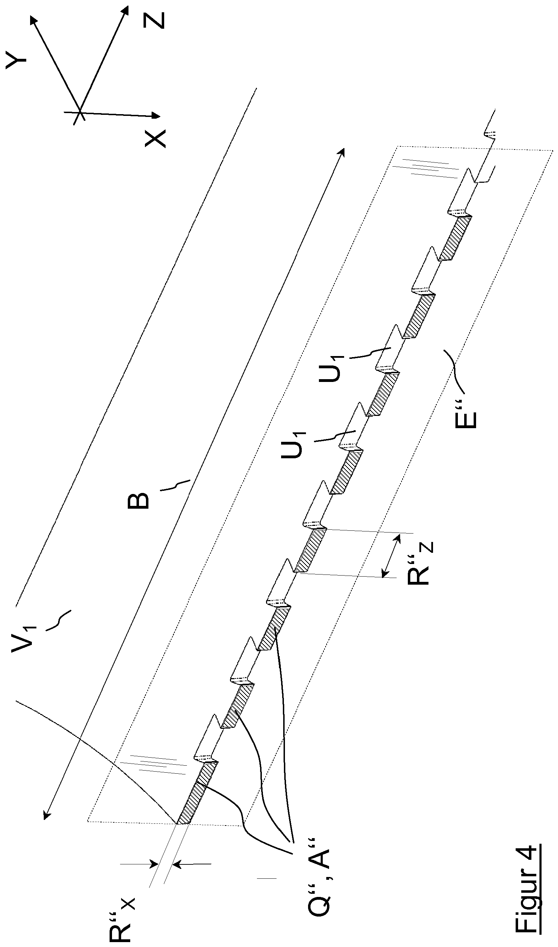

Fig. 4 zeigt einen weiteren Querschnitt Q", der durch den Schnitt einer zu den Ebenen $E_D$ beziehungsweise E' parallelen weiteren Schnittebene E" mit der Verjüngungszone $V_1$ entsteht an einer Y-Position, die von der Dünnstelle noch weiter beabstandet ist als die Schnittebene E', aber noch innerhalb der Strecke $L_u$. Die resultierende Querschnittsfläche A" setzt sich wieder aus einzelnen Rechtecken zusammen, deren Breite $R''_Z$ (evtl. mit Ausnahme der in Z-Richtung am Rand liegenden Abschnitte) jedoch geringer ist als beim Querschnitt Q'. Aufgrund der mit zunehmendem Y-Abstand von der Dünnstelle ansteigenden Materialdicke der Verjüngungszone $V_1$ nimmt jedoch die Dicke $R'_X$, $R''_X$ der einzelnen Teilquerschnitte entsprechend zu. Im Ergebnis folgt aus der erfindungsgemäß gewählten Form der Ausnehmungen $U_1$ entlang der Strecke $L_u$, dass auch die Querschnittsfläche A" mit der Querschnittfläche A' beziehungsweise $A_D$ übereinstimmt (Flächenäquivalent). Dieser Effekt, also die mit zunehmendem Y-Abstand von der Dünnstelle D weitgehend gleichbleibende Flächenspannung oder Flächenlast, gilt in der dargestellten Ausführungsform entlang der vorgebbaren Strecke $L_u$ aufgrund der passenden Formgebung der Ausnehmungen $U_1$. Die Strecke $L_u$ kann sich über die gesamte Y-Länge einer Ausnehmung $U_1$, $U_2$ erstrecken, oder nur einen Teil davon betreffen.

Eine gedachte Verschiebung der Schnittebene E entlang der Strecke $L_u$ erzeugt in diesem Ausführungsbeispiel stets eine Gesamtquerschnittsfläche A', A"..., deren Größe mit derjenigen $A_D$ der Dünnstelle D übereinstimmt.

Das in den Figuren 2 bis 4 dargestellte Dünnstellengelenk wurde mittels seiner Ausnehmungen $U_1$, $U_2$ so gestaltet, dass die entlang der Strecke $L_u$ gebildeten Schnitte $Q_D$, Q' und Q" stets die gleiche Gesamtquerschnittsfläche erzeugen, so dass Zug- oder Druckspannungen entlang der Strecke $L_u$ und insoweit unabhängig vom Y-Abstand zur Dünnstelle D weitgehend konstant bleiben.

Das gleiche, in den Figuren nicht gezeigte Prinzip gilt auch, wenn statt der Normalspannungen die Biegespannungen konstant gehalten werden sollen, die aus einer Biegung der Materialabschnitte $M_1$, $M_2$ relativ zueinander um die Z-Achse resultieren (Widerstandsmoment-Äquivalent). Da das Widerstandsmoment einer Querschnittsfläche gegen Biegung überproportional von der Höhe des Querschnitts (im vorliegenden Fall von der Dicke $R'_X$, $R''_X$ der einzelnen Teilquerschnitte) abhängt, sind die Ausnehmungen $U_1$, $U_2$ entsprechend so zu wählen, dass die jeweilige Breite $R'_Z$, $R''_Z$ der Teilquerschnitte mit zunehmendem Y-Abstand überproportional reduziert wird, um im Ergebnis ein konstantes Widerstandsmoment zu erzeugen.

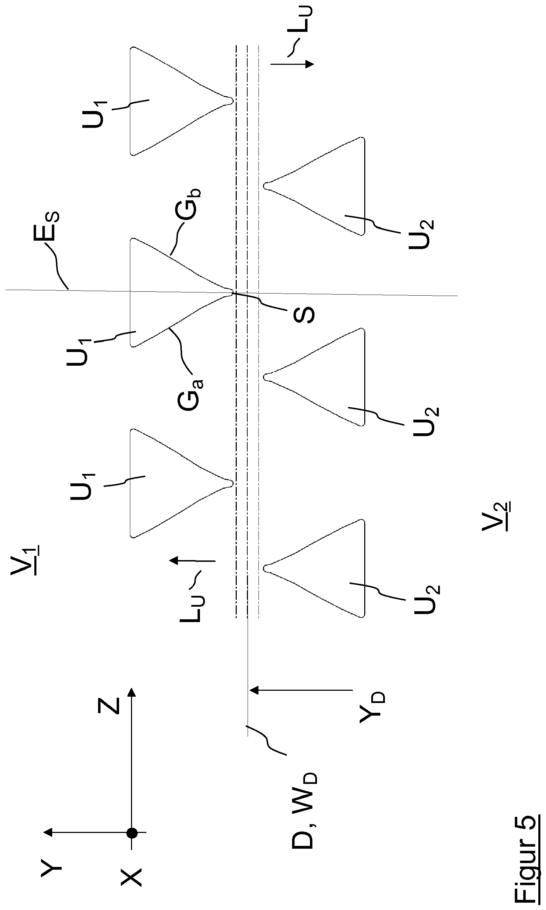

Fig. 5 zeigt einen Ausschnitt des erfindungsgemäßen Dünnstellengelenks der Figuren 1 bis 4 in Draufsicht in X-Richtung. Die Dünnstelle D erstreckt sich in Breitenrichtung Z entlang einer idealisiert angenommenen Schwenkachse $W_D$ an der Y-Position der Dünnstelle, $Y_D$. In Y-Richtung zu beiden Seiten der Dünnstelle D sind annähernd dreieckige Ausnehmungen $U_1$, $U_2$ in die Verjüngungszonen $V_1$, $V_2$ eingebracht, wie bereits anhand der Figuren 2 bis 4 beschrieben wurde. Die Kontur jeder Ausnehmung $U_1$, $U_2$ umfasst dabei zwei Begrenzungslinien $G_a$, $G_b$, die sich, ausgehend von einem gemeinsamen Scheitelpunkt S, symmetrisch zu beiden Seiten einer durch den Scheitelpunkt S gedachten Schnittebene $E_s$ erstrecken, die in X-Y-Richtung verläuft. An ihrem der Dünnstelle D abgewandten Ende sind die Ausnehmungen $U_1$, $U_2$ jeweils durch in Z-Richtung verlaufende Wandabschnitte begrenzt.

Wie Fig. 5 ferner zeigt, grenzen die Ausnehmungen $U_1$, $U_2$ nicht unmittelbar an die idealisiert angenommene Schwenkachse $W_D$ der Dünnstelle D, sondern haben hierzu einen geringen Y-Abstand. Zur Vermeidung von Hotspots und von undefinierten Schwächungen der Dünnstelle beginnen die Ausnehmungen $U_1$, $U_2$ erst in einem geringen Y-Abstand zur Dünnstelle D.

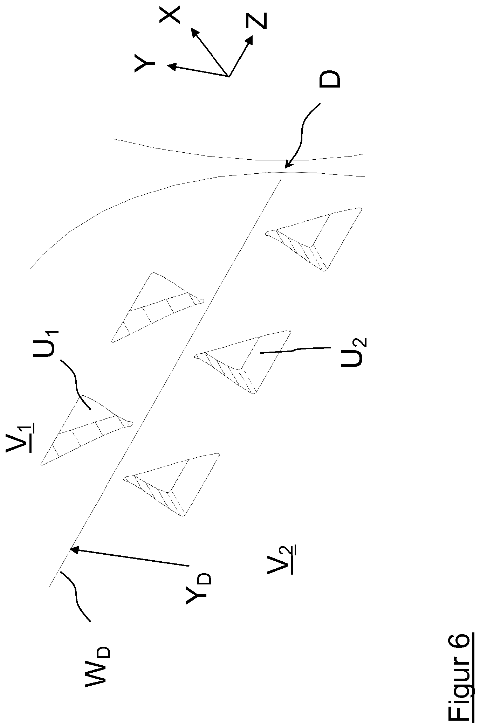

Fig. 6 zeigt einen perspektivischen Ausschnitt eines erfindungsgemäßen Dünnstellengelenks mit den Ausnehmungen $U_1$, $U_2$ in den Verjüngungszonen $V_1$, $V_2$.

Bezugszeichenliste

| X | Dickenrichtung |
| Y | Längenrichtung |
| Z | Breitenrichtung |
| $M_1$, $M_2$ | Materialabschnitt |
| $V_1$, $V_2$ | Verjüngungszone |
| D | Dünnstelle |
| Da, Db | Dünnstellenabschnitte |
| H | Öffnung |

| | |
|---|---|
| $W_D$ | Schwenkachse |
| $U_1, U_2$ | Ausnehmungen |
| $Q_D$ | Querschnitt durch Dünnstelle D |
| $Q'_v, Q''_v$ | Querschnitt durch Verjüngungszone |
| $E_D$ | Schnittebene durch Dünnstelle |
| $E', E''$ | Schnittebenen durch Verjüngungszone |
| $E_S$ | Schnittebene durch Verjüngungszone |
| $B$ | Schnittbreite |
| $R_X$ | Dicke einer Teilquerschnittfläche |
| $R_Z$ | Breite einer Teilquerschnittfläche |
| $A_D$ | Querschnittsfläche durch die Dünnstelle |
| $A', A''$ | Querschnittsfläche in den Schnitten Q',Q" |
| $L_u$ | Streckenabschnitt in Y-Richtung |

**Patentansprüche**

1. Dünnstellengelenk,

    a) umfassend einen ersten Materialabschnitt ($M_1$) und einen mit diesem über eine Dünnstelle (D) monolithisch verbundenen zweiten Materialabschnitt ($M_2$), wobei sich die in einer Dickenrichtung (X) gemessene Materialdicke ($X_1$, $X_2$) des ersten bzw. zweiten Materialabschnitts ($M_1$, $M_2$) in einer Verjüngungszone ($V_1$, $V_2$) entlang einer zur X-Richtung senkrechten Längenrichtung (Y) bis zur Dünnstelle (D) an der Dünnstellenposition ($Y_D$) auf eine minimale Dünnstellendicke ($X_D$) reduziert, und
    b) wobei sich eine Schwenkachse ($W_D$) der Dünnstelle (D) über die Breite der Dünnstelle (D) entlang einer zur X- und Y-Richtung senkrecht verlaufenden Breitenrichtung (Z) in Z-Richtung erstreckt,
    c) und wobei ein in einer X-Z-Ebene ($E_D$) durch die Dünnstelle (D) gebildeter Querschnitt ($Q_D$) mit einer in Z-Richtung verlaufenden Schnittbreite (B) eine Querschnittsfläche ($A_D$) aufweist, und
    d) wobei mindestens eine Ausnehmung ($U_1$, $U_2$) in wenigstens einer Verjüngungszone ($V_1$, $V_2$) vorgesehen ist,

    **dadurch gekennzeichnet,**

    e) dass ein Querschnitt (Q', Q"...) einer Verjüngungszone ($V_1$, $V_2$) mit einer zur Ebene ($E_D$) parallel verlaufenden und durch die wenigstens eine Ausnehmung ($U_1$, $U_2$) gelegten Schnittebene (E', E"...) mit der Schnittbreite (B) eine Querschnittsfläche (A', A"...) erzeugt,
    f) wobei entlang eines in Y-Richtung verlaufenden Streckenabschnitts (Lu) gebildete Querschnitte (Q', Q"...) Querschnittsflächen (A', A"...) erzeugen, die sich aus mehreren einzelnen Teilquerschnittsflächen zusammensetzen, deren Breite (R'z, R"z) mit zunehmendem Abstand der Querschnitte Q', Q"...) zur Dünnstellenposition ($Y_D$) abnimmt.

2. Dünnstellengelenk nach Anspruch 1, **dadurch gekennzeichnet, dass** entlang des in Y-Richtung verlaufenden Streckenabschnitts (Lu) gebildete Querschnittsflächen (A', A"...) eine Festigkeit aufweisen, welche innerhalb von Toleranzen derjenigen Festigket entspricht, welche die Querschnittsfläche ($A_D$) an der Dünnstelle (D) aufweist.

3. Dünnstellengelenk nach Anspruch 1 oder 2, **dadurch gekennzeichnet, dass** entlang des in Y-Richtung verlaufenden Streckenabschnitts (Lu) die Bedingung (A', A"...) = const., vorzugsweise (A', A"...) = $A_D$, eingehalten wird.

4. Dünnstellengelenk nach Anspruch 1 oder 2, **dadurch gekennzeichnet, dass** entlang der Länge ($L_u$) das der jeweiligen Querschnittsfläche (A', A"...) zugehörige Widerstandsmoment um die Schwenkachse ($W_D$) konstant ist.

5. Dünnstellengelenk nach einem der vorigen Ansprüche, **dadurch gekennzeichnet, dass** der Querschnitt ($Q_D$) der Dünnstelle (D) die Form eines oder mehrerer schmaler Rechtecke hat.

6. Dünnstellengelenk nach einem der vorigen Ansprüche, **dadurch gekennzeichnet, dass** der Querschnitt (Q', Q"...) mehrere, bevorzugt gleiche geometrische Formen, bevorzugt mit gleicher Größe, umfasst.

7. Dünnstellengelenk nach einem der vorigen Ansprüche, **dadurch gekennzeichnet, dass** wenigstens eine Ausnehmung ($U_1$, $U_2$) in einem Schnitt mit einer Y-Z-Ebene einen Umriss aufweist, bei dem

    a) sich zwei Begrenzungslinien ($G_a$, $G_b$) von einem gemeinsamen, der Dünnstellenposition ($Y_D$) am nächsten liegenden Scheitelpunkt (S) in Y-Richtung von der Dünnstelle (D) fort erstrecken,
    b) wobei sich eine oder beide Begrenzungslinien mit zunehmendem Abstand zur Dünnstellenposition ($Y_D$) längs einer Kurve, bevorzugt symmetrisch, von einer im Scheitelpunkt liegenden X-Y-Ebene ($E_s$) entfernen.

8. Dünnstellengelenk nach dem vorherigen Anspruch, **dadurch gekennzeichnet, dass** ein Abschnitt der Kurve in Abhängigkeit der an der jeweiligen Y-Position gegebenen Materialdicke ($X_1$, $X_2$) der Verjüngungszone ($V_1$, $V_2$) gebildet ist.

9. Dünnstellengelenk nach einem der vorigen Ansprüche, **dadurch gekennzeichnet, dass** mehrere Aus-

nehmungen ($U_1$, $U_2$), vorzugsweise mit gleicher Form, in Breitenrichtung (Z) nebeneinander liegen.

10. Dünnstellengelenk nach einem der vorigen Ansprüche, **dadurch gekennzeichnet, dass** in Y-Richtung zu beiden Seiten der Dünnstelle (D) eine oder mehrere Ausnehmungen ($U_1$, $U_2$) vorgesehen sind, welche sich bezüglich der Schwenkachse ($W_D$) bevorzugt symmetrisch oder in Z-Richtung zueinander versetzt gegenüberliegen.

11. Dünnstellengelenk nach dem vorhergehenden Anspruch, **dadurch gekennzeichnet, dass** in beiden Verjüngungszonen ($V_1$, $V_2$) wenigstens jeweils eine Ausnehmung ($U_1$, $U_2$), vorzugsweise wenigstens jeweils eine Gruppe von in Z-Richtung hintereinander angeordneten Ausnehmungen vorgesehen ist, wobei die jeweiligen Ausnehmungen oder Gruppen von Ausnehmungen in Y-Richtung den gleichen Abstand zur Dünnstelle (D) haben.

12. Dünnstellengelenk nach einem der vorigen Ansprüche, **dadurch gekennzeichnet, dass** die Dünnstelle (D) durch wenigstens eine Öffnung (H) in mehrere, vorzugsweise zwei, in Breitenrichtung (Z) nebeneinander liegende Dünnstellenabschnitte (D', D") aufgeteilt ist.

13. Messgerät, insbesondere Waage, umfassend ein Dünnstellengelenk nach einem der vorigen Ansprüche, wobei das Dünnstellengelenk vorzugsweise Teil eines Hebels, einer Koppelstange, eines Drehgelenks, eines Kreuzfedergelenks oder einer Parallellenkermechanik ist.

14. Verfahren zur Herstellung eines Dünnstellengelenks nach einem der Ansprüche 1 bis 12, wobei die Ausnehmung ($U_1$, $U_2$) zumindest teilweise mit Hilfe eines Lasers, bevorzugt von beiden Seiten einer in der Schwenkachse ($W_D$) liegenden Y-Z-Ebene, in die Verjüngungszone ($V_1$, $V_2$) eingebracht wird.

**Claims**

1. Thin flexure joint

    a) comprising a first material portion ($M_1$) and a second material portion ($M_2$) monolithically connected thereto via a thin point (D),
    wherein the material thickness ($X_1$, $X_2$), measured in a thickness direction (X), of the first and second material portions ($M_1$, $M_2$), respectively, decreases in a tapering zone ($V_1$, $V_2$) in a longitudinal direction (Y), perpendicular to the X direction, up to the thin point (D) at the thin point position ($Y_D$) to a minimum thin point thickness ($X_D$), and

    b) wherein a pivot axis ($W_D$) of the thin point (D) extends in the Z direction over the width of the thin point (D) in a width direction (Z) running perpendicular to the X and Y directions,
    c) and wherein a cross section ($Q_D$) formed in an X-Z plane ($E_D$) through the thin point (D) has a cross-sectional area ($A_D$) with a section width (B) running in the Z direction, and
    d) wherein at least one recess ($U_1$, $U_2$) is provided in at least one tapering zone ($V_1$, $V_2$),

    **characterized in that**

    e) a cross section (Q', Q"...) of a tapering zone ($V_1$, $V_2$) with a section plane (E', E"...) running parallel to the plane ($E_D$) and positioned through the at least one recess ($U_1$, $U_2$) produces a cross-sectional area (A', A"...) with the section width (B),
    f) wherein cross sections (Q', Q"...) formed along a portion of the length (Lu) running in the Y direction produce cross-sectional areas (A', A"...) which are composed of several individual partial cross-sectional areas, the width (R'z, R"z) of which decreases with increasing distance of the cross sections (Q', Q"...) from the thin point position ($Y_D$).

2. Thin flexure joint according to claim 1, **characterized in that** cross-sectional areas (A', A"...) formed along the portion of the length (Lu) running in the Y direction have a strength which corresponds, within tolerances, to that strength which the cross-sectional area ($A_D$) has at the thin point (D).

3. Thin flexure joint according to claim 1 or 2, **characterized in that** the condition (A', A"...) = const., preferably (A', A"...) = $A_D$, is met along the portion of the length (Lu) running in the Y direction.

4. Thin flexure joint according to claim 1 or 2, **characterized in that** the moment of resistance, associated with the respective cross-sectional area (A', A"...), about the pivot axis ($W_D$) is constant along the length (Lu).

5. Thin flexure joint according to one of the preceding claims, **characterized in that** the cross section ($Q_D$) of the thin point (D) has the shape of one or more narrow rectangles.

6. Thin flexure joint according to one of the preceding claims, **characterized in that** the cross section (Q', Q"...) comprises several, preferably identical geometric shapes, preferably of the same size.

7. Thin flexure joint according to one of the preceding claims, **characterized in that** at least one recess

($U_1$, $U_2$), in a section with a Y-Z plane, has an outline in which

> a) two boundary lines ($G_a$, $G_b$) extend away from the thin point (D) in the Y direction from a common apex (S), which lies closest to the thin point position ($Y_D$),
> b) wherein one or both boundary lines depart from an X-Y plane (Es) lying at the apex, along a curve, preferably symmetrically, as the distance from the thin point position ($Y_D$) increases.

8. Thin flexure joint according to the preceding claim, **characterized in that** a portion of the curve is formed in dependence on the material thickness ($X_1$, $X_2$) of the tapering zone ($V_1$, $V_2$) given at the respective Y position.

9. Thin flexure joint according to one of the preceding claims, **characterized in that** several recesses ($U_1$, $U_2$), preferably of the same shape, lie next to one another in the width direction (Z).

10. Thin flexure joint according to one of the preceding claims, **characterized in that**, on both sides of the thin point (D) in the Y direction, one or more recesses ($U_1$, $U_2$) are provided which, with respect to the pivot axis ($W_D$), lie opposite one another, preferably symmetrically or offset with respect to one another in the Z direction.

11. Thin flexure joint according to the preceding claim, **characterized in that** in each case at least one recess ($U_1$, $U_2$), preferably in each case at least one group of recesses arranged one behind the other in the Z direction, is provided in both tapering zones ($V_1$, $V_2$), wherein the respective recesses or groups of recesses have the same distance from the thin point (D) in the Y direction.

12. Thin flexure joint according to one of the preceding claims, **characterized in that** the thin point (D) is divided by at least one opening (H) into several, preferably two, thin point portions (D', D") lying next to one another in the width direction (Z).

13. Measuring apparatus, in particular balance, comprising a thin flexure joint according to one of the preceding claims, wherein the thin flexure joint is preferably part of a lever, a coupling rod, a swivel joint, a flexural pivot or a parallel link mechanism.

14. Method for producing a thin flexure joint according to one of claims 1 to 12, wherein the recess ($U_1$, $U_2$) is introduced into the tapering zone ($V_1$, $V_2$) at least partially with the aid of a laser, preferably from both sides of a Y-Z plane lying in the pivot axis ($W_D$).

**Revendications**

1. Articulation de partie mince,

> a) comprenant une première section de matériau ($M_1$) et une seconde section de matériau ($M_2$) reliée monolithiquement à celle-ci par l'intermédiaire d'une partie mince (D), l'épaisseur de matériau ($X_1$, $X_2$) mesurée dans une direction d'épaisseur (X) de la première ou de la seconde section de matériau ($M_1$, $M_2$) se réduisant à une épaisseur minimale de partie mince ($X_D$) dans une zone de rétrécissement ($V_1$, $V_2$) le long d'une direction de longueur (Y) perpendiculaire à la direction X jusqu'à la partie mince (D) dans la position de partie mince ($Y_D$), et
> b) un axe de pivotement ($W_D$) de la partie mince (D) s'étendant sur la largeur de la partie mince (D) le long d'une direction de largeur (Z) en direction Z perpendiculaire aux directions X et Y,
> c) et une section transversale ($Q_D$) formée par la partie mince (D) dans un plan X-Z ($E_D$) présentant une surface de section transversale ($A_D$) comportant une largeur de coupe (B) orientée dans la direction Z, et
> d) au moins un évidement ($U_1$, $U_2$) étant prévu dans au moins une zone de rétrécissement ($V_1$, $V_2$),

> **caractérisée en ce**

> e) qu'une section transversale (Q', Q"...) d'une zone de rétrécissement ($V_1$, $V_2$) comportant un plan de coupe (E', E"...) parallèle au plan ($E_D$) et traversant l'au moins un évidement ($U_1$, $U_2$) génère une surface de section transversale (A', A"...) avec la largeur de coupe (B),
> f) des sections transversales (Q', Q"...) formées le long d'une section de tronçon (Lu) s'étendant dans la direction Y générant des surfaces de section transversale (A', A"...), lesquelles sont composées de plusieurs surfaces de section transversale partielles individuelles dont la largeur (R'z, R"z) diminue avec la distance croissante des sections transversales (Q', Q"...) par rapport à la position de partie mince ($Y_D$).

2. Articulation de partie mince selon la revendication 1, **caractérisée en ce que** des surfaces de section transversale (A', A"...) formées le long d'une section de tronçon (Lu) s'étendant dans la direction Y présentent une solidité, laquelle solidité correspond, au sein de tolérances, à la solidité que présente lasurface de section transversale ($A_D$) au niveau de la partie mince (D).

3. Articulation de partie mince selon la revendication 1 ou 2, **caractérisée en ce que** la condition (A', A"...)

= const., de préférence (A', A"...) = $A_D$, est respectée le long de la section de tronçon ($L_u$) s'étendant dans la direction Y.

4. Articulation de partie mince selon la revendication 1 ou 2, **caractérisée en ce que** le moment de résistance associé à la surface de section transversale (A', A"...) respective est constant autour de l'axe de pivotement ($W_D$) le long de la longueur (Lu).

5. Articulation de partie mince selon l'une des revendications précédentes, **caractérisée en ce que** la section transversale ($Q_D$) de la partie mince (D) est en forme d'un ou de plusieurs rectangles étroits.

6. Articulation de partie mince selon l'une des revendications précédentes, **caractérisée en ce que** la section transversale (Q', Q"...) comprend plusieurs formes géométriques, de préférence identiques, de préférence de taille identique.

7. Articulation de partie mince selon l'une des revendications précédentes, **caractérisée en ce qu'**au moins un évidement ($U_1$, $U_2$) présente un contour dans une coupe comportant un plan Y-Z,

   a) deux lignes de délimitation ($G_a$, $G_b$) s'étendant à partir d'un point culminant (S) commun le plus proche de la position de partie mince ($Y_D$) dans la direction Y à partir de la partie mince (D), b) une ou les deux lignes de délimitation s'éloignant avec une distance croissante de la position de partie mince ($Y_D$) le long d'une courbe, de préférence symétriquement, à partir d'un plan X-Y (Es) situé au niveau du point culminant.

8. Articulation de partie mince selon la revendication précédente, **caractérisée en ce qu'**une section de la courbe est formée en fonction de l'épaisseur de matière ($X_1$, $X_2$) de la zone de rétrécissement ($V_1$, $V_2$) donnée à la position Y respective.

9. Articulation de partie mince selon l'une des revendications précédentes, **caractérisée en ce que** plusieurs évidements ($U_1$, $U_2$), de préférence de forme identique, se situent côte à côte dans la direction de largeur (Z).

10. Articulation de partie mince selon l'une des revendications précédentes, **caractérisée en ce qu'**un ou plusieurs évidements ($U_1$, $U_2$) sont prévus dans la direction Y de chaque côté de la partie mince (D), lesquels évidements sont disposés de façon symétrique par rapport à l'axe de pivotement ($W_D$) ou de façon décalée les uns par rapport aux autres dans la direction Z.

11. Articulation de partie mince selon la revendication précédente, **caractérisée en ce que** respectivement au moins un évidement ($U_1$, $U_2$), de préférence respectivement au moins un groupe d'évidements disposés les uns derrière les autres dans la direction Z, est prévu dans les deux zones de rétrécissement ($V_1$, $V_2$), les évidements ou groupes d'évidements respectifs se trouvant à distance identique par rapport à la partie mince (D) dans la direction Y.

12. Articulation de partie mince selon l'une des revendications précédentes, **caractérisée en ce que** la partie mince (D) est divisée par au moins une ouverture (H) en plusieurs, de préférence en deux sections de partie mince (D', D") situées côte à côte dans la direction de largeur (Z).

13. Dispositif de mesure, en particulier balance, comprenant une articulation de partie mince selon l'une des revendications précédentes, dans lequel l'articulation de partie mince fait de préférence partie d'un levier, d'une tige d'accouplement, d'une articulation rotative, d'une articulation à ressort croisé ou d'un mécanisme de bras parallèle.

14. Procédé de fabrication d'une articulation de partie mince selon l'une des revendications 1 à 12, l'évidement ($U_1$, $U_2$) étant réalisé dans la zone de rétrécissement ($V_1$, $V_2$) au moins partiellement à l'aide d'un laser, de préférence des deux côtés d'un plan Y-Z situé dans l'axe de pivotement ($W_D$).

Figur 1

Figur 2

Figur 3

Figur 4

EP 3 252 443 B1

Figur 5

EP 3 252 443 B1

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2004340593 A
- US 7307226 B2
- DE 102013108097 B4
- DE 10015311 B4
- JP 2015114160 A
- DE 102016105985